# FASCICULE DE BREVET EUROPEEN

(11) **EP 0 761 380 B1**
(45) Date de publication et mention de la délivrance du brevet: **08.12.1999**
(21) Numéro de dépôt: 96401915.2
(22) Date de dépôt: 06.09.1996
(51) Int. Cl.: B23K 35/38

(54) **Procédé et melange gazeux pour le soudage à l'arc de pièces en aluminium**
Verfahren und Gasgemisch zum Lichtbogenschweissen von Werkstücken aus Aluminium
Process and gas mixture for arc welding aluminium workpieces

(30) Priorité: 08.09.1995 FR 9510518
(43) Date de publication de la demande: 12.03.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Marchand, Didier, 78100 Saint-Germain-En-Laye (FR); Diot, Henri, 95310 Saint-Ouen L'Aumone (FR); Soula, Richard, 44120 Vertou (FR)
(74) Mandataire: Helary, Yvon

(56) Documents cités:
- EP-A- 0 640 431
- DE-C- 4 028 074
- FR-A- 1 230 274
- AUTOMATIC WELDING, vol. 31, no. 10, Octobre 1978, CAMBRIDGE GB, pages 3-6, XP002003771 M.M. NERODENKO ET AL: "Niobium alloys welded in helium with nitrogen added"
- CHEMICAL ABSTRACTS, vol. 72, no. 12, 23 Mars 1970 Columbus, Ohio, US; abstract no. 58440, MANTANI, TAIICHIRO ET AL: "Addition of nitrogen to shield gas (argon- helium ) in MIG [metal inert gas] welding of aluminum alloys" XP002003772 & KEIKINZOKU (1968), 18(12), 622-6 CODEN: KEIKA6, 1968,

## Description

La présente invention concerne le soudage à l'arc avec électrode réfractaire (soudage TIG pour "Tungstene lnert Gas") de pièces en aluminium ou en alliages d'aluminium, et plus particulièrement un mélange gazeux de protection pour ce type de soudage.

On sait que, du fait de la tendance à la formation de couches d'alumine Aℓ₂O₃ à la surface de pièces en aluminium, ces couches, isolantes, constituent une gêne pour le soudage TIG de telles pièces. On sait que, d'autre part, pour détruire la couche d'alumine, une alimentation de l'arc en courant alternatif peut être utilisée. En polarité dite inverse, le flux d'électrons s'échappant de la pièce en aluminium craque et disperse la couche d'alumine. Pendant la demi-période suivante, le flux d'électrons émis par l'électrode et bombardant la pièce en aluminium assure la pénétration de la soudure. L'électrode est ainsi alternativement chaude, quand elle est réceptrice, puis froide quand elle est émettrice (polarité directe), ce qui explique que la commutation de la polarité inverse à la polarité directe est aisée alors que l'inversion de polarité directe en polarité inverse est plus délicate, le bain étant moins émissif que l'électrode de tungstène. Ce phénomène est aggravé par la présence d'hélium dans le gaz de soudage. En effet, l'hélium, à la différence de l'argon, ne favorise pas l'ionisation du gaz, ce qui peut entraîner l'apparition de brèves ruptures d'arc ou d'instabilité, ceci d'autant plus que le pourcentage en hélium est élevé. En soudage manuel, le soudeur est alors obligé de compenser en restant momentanément sur place, ce qui réduit considérablement la vitesse moyenne de soudage. En soudage automatique, les instabilités peuvent occasionner des irrégularités de la pénétration entraînant rebut ou reprise des pièces soudées. On comprend que, bien que l'addition d'hélium dans l'argon améliore notablement les performances du soudage TIG des pièces en aluminium, essentiellement en ce qui concerne l'accroissement des profondeurs de pénétration et une meilleure compacité, dans la pratique, les teneurs en hélium dans les mélanges de soudage TIG de pièces d'aluminium n'excèdent pas quelques dizaines de pourcents, une teneur atteignant 50 % étant exceptionnelle, comme le rappelle l'ouvrage "Welding Aluminum : Theory and Practice" édité par Aluminum Association, second edition, June 1981, page 6.3.

Le document US-A-5.210.389 a proposé, indifféremment pour le soudage MIG ou TIG de pièces en aluminium, d'adjoindre au gaz inerte (l'argon dans les exemples comparatifs donnés) de très faibles quantités d'azote, n'excédant pas 250 ppm pour éviter les phénomènes de rupture d'arc, qui apparaitraient même en l'absence d'hélium.

La présente invention a pour objet de proposer un nouveau mélange gazeux pour le soudage TIG en courant alternatif de pièces en aluminium ou en alliages d'aluminium permettant de profiter pleinement des effets bénéfiques d'une hauteur teneur en hélium au niveau des performances de soudage et de la compacité du cordon sans affecter notablement la stabilité de l'arc et la vitesse de soudage.

Pour ce faire, selon une caractéristique de l'invention, on utilise, à l'emplacement de la soudure, un mélange gazeux comprenant entre 50 % et 80 % d'hélium, typiquement au moins 60 %, de préférence entre 70 et 80 % d'hélium, et entre 300 et 1000vpm, typiquement entre 400 et 800 vpm d'azote, le solde étant de l'argon.

La Demanderesse a en effet constaté que, contrairement à l'enseignement du document US-A-5.210.389 sus-mentionné, qui ne décrit pas de mélanges gazeux précis contenant de l'hélium, le rôle stabilisateur de l'azote ne présentait un réel intérêt que pour les fortes teneurs en hélium, pour lesquelles les risques de rupture d'arc sont significatifs.

Ainsi, avec un mélange comprenant :
- 80 % He,
- 600 ppm N₂,
- solde argon,
on réalise, en TIG à courant alternatif, l'assemblage sur une épaisseur de 5 mm de pièces en alliages d'aluminium et de magnésium avec une intensité de seulement 95 Ampères. La compacité, les caractéristiques mécaniques et l'aspect du cordon sont bons. Il n'y a pas de détérioration de l'électrode.

## Revendications

1. Procédé de soudage à l'arc en courant alternatif avec électrode réfractaire de pièces en aluminium ou en alliages d'aluminium, utilisant, à l'emplacement de la soudure, un mélange gazeux de protection comprenant entre 50 % et 80 % d'hélium, entre 300 et 1000 vpm d'azote, le solde étant l'argon.

2. Procédé selon la revendication 1, caractérisé en ce qu'on utilise un mélange gazeux de protection contenant au moins 60 % d'hélium et moins de 1000 vpm d'azote.

3. Procédé selon la revendication 2, caractérisé en ce qu'on utilise un mélange gazeux de protection contenant de 400 à 800 vpm d'azote.

4. Mélange gazeux pour le soudage à l'arc avec électrode réfractaire sous courant alternatif de pièces contenant de l'aluminium, comprenant entre 60 et 80 % d'hélium, entre 300 et 1000 vpm d'azote, le solde étant l'argon.

5. Mélange gazeux selon la revendication 4, caractérisé en ce que la teneur en azote est comprise entre 400 et 800 vpm.

## Claims

1. Process for alternating-current arc welding with a refractory electrode of components made of aluminium or of aluminium alloys, employing, at the location of the weld, a gaseous protective mixture including between 50 % and 80 % of helium and between 300 and 1000 vpm of nitrogen, the remainder being argon.

2. Process according to Claim 1, characterized in that a gaseous protective mixture is employed containing at least 60 % of helium and less than 1000 vpm of nitrogen.

3. Process according to Claim 2, characterized in that a gaseous protective mixture is employed containing from 400 to 800 vpm of nitrogen.

4. Gaseous mixture for arc welding with a refractory electrode and under alternating current of components containing aluminium, including between 60 % and 80 % of helium and between 300 and 1000 vpm of nitrogen, the remainder being argon.

5. Gaseous mixture according to Claim 4, characterized in that the nitrogen content is between 400 and 800 vpm.

## Patentansprüche

1. Verfahren zum Wechselstromlichtbogenschweißen mit nichtabschmelzender Elektrode von Teilen aus Aluminium oder einer Aluminiumlegierung, bei dem an der Schweißstelle ein Schutzgasgemisch verwendet wird, das zwischen 50% und 80% Helium, zwischen 300 und 1000 vpm Stickstoff, Rest Argon, enthält.

2. Verfahren nach Anspruch 1, dadurch gekennzeichnet, daß bin Schutzgasgemisch verwendet wird, das mindestens 60% Helium und mindestens 1000 vpm Stickstoff enthält.

3. Verfahren nach Anspruch 2, dadurch gekennzeichnet, daß ein Schutzgasgemisch verwendet wird, das von 400 bis 800 vpm Stickstoff enthält.

4. Gasgemisch zum Lichtbogenschweißen mit nichtabschmelzender Elektrode unter Wechselstrom von Aluminium enthaltenden Teilen, das zwischen 60% und 80% Helium, zwischen 300 und 1000 vpm Stickstoff, Rest Argon, enthält.

5. Gasgemisch nach Anspruch 4, dadurch gekennzeichnet, daß der Stickstoffgehalt zwischen 400 und 800 vpm liegt.
